# EUROPÄISCHE PATENTSCHRIFT

(11) **EP 3 060 878 B1**
(45) Veröffentlichungstag und Bekanntmachung des Hinweises auf die Patenterteilung: **03.06.2020**
(21) Anmeldenummer: 14786671.9
(22) Anmeldetag: 21.10.2014
(51) Int. Cl.: G01B 11/245, G01N 21/47

(54) **VERFAHREN UND VORRICHTUNG ZUR ERFASSUNG EINES OBJEKTS MIT KREISBOGENFÖRMIGEN TRAGEELEMENTEN**
METHOD AND APPARATUS FOR DETECTING AN OBJECT WITH CIRCULAR-ARC-SHAPED SUPPORTING ELEMENTS
PROCÉDÉ ET DISPOSITIF DE DÉTECTION D'UN OBJET COMPORTANT DES ÉLÉMENTS DE SUPPORT EN FORME D'ARC DE CERCLE

(30) Priorität: 22.10.2013 DE 102013221415
(43) Veröffentlichungstag der Anmeldung: 31.08.2016
(73) Patentinhaber: Fraunhofer-Gesellschaft zur Förderung der angewandten Forschung e.V., 80686 München (DE)
(72) Erfinder: TAUSCH, Reimar, 64293 Darmstadt (DE); MONROY, Rafael, 79100 Freiburg (DE); SANTOS, Pedro, 64839 Münster (DE); RITZ, Martin, 64283 Darmstadt (DE); SCHMEDT, Hendrik, 64625 Bensheim (DE)
(74) Vertreter: Patentanwälte Bressel und Partner mbB
(86) Internationale Anmeldenummer: PCT/EP2014/072497
(87) Internationale Veröffentlichungsnummer: WO 2015/059115

(56) Entgegenhaltungen:
- EP-A1- 2 251 639
- CN-A- 102 590 150
- DE-A1- 10 025 741
- DE-U1-202013 000 050
- GB-A- 2 335 488
- US-A- 4 894 551

## Beschreibung

Die Erfindung betrifft ein Verfahren und eine Vorrichtung zur Erfassung eines Objekts, insbesondere einer optischen Erfassung eines dreidimensionalen Objektes.

Die optische Erfassung von Eigenschaften eines Objekts, beispielsweise einer, insbesondere dreidimensionalen, Geometrie, einer Textur und/oder von, insbesondere optischen, Materialeigenschaften, erfordert in der Regel einen hohen Zeitaufwand und die volle Aufmerksamkeit des Bedienpersonals während des gesamten Prozesses. Grund hierfür ist, dass die vorhergehend erläuterte Erfassung in vielen Einzelschritten erfolgt, deren Teilergebnisse dann letztendlich zu einem Endergebnis zusammengefasst werden. Jeder dieser Schritte besteht zumindest aus einer präzisen Positionierung einer Erfassungseinrichtung relativ zum Objekt, was derzeit aufwändig und auch fehleranfällig ist und somit die Qualität der Erfassung negativ beeinflussen kann. Weiter kann es erforderlich sein, für jeden Schritt eine erneute Kalibration der Erfassungseinrichtung vorzunehmen.

Außerdem ist für jedes zu erfassende Objekt in einem Vorbereitungsschritt das Erfassungssystem einzurichten und an geometrische Rahmenbedingungen, z.B. an Dimensionen des zu erfassenden Objektes, anzupassen.

Allerdings erfordert eine qualitativ hochwertige Erfassung der vorhergehend erläuterten Eigenschaften diese Vielzahl von Erfassungsschritten. Somit ist es erforderlich, einen Ausgleich zwischen einer Minimierung der Anzahl von Erfassungsschritten und einer Maximierung der Erfassungsqualität zu finden. Hierbei ist es insbesondere wünschenswert, das Objekt vollständig zu erfassen.

Die CH 702 255 A1 offenbart eine Vorrichtung zur dreidimensionalen Erfassung eines Objekts mittels optischer Abtastung. Hierbei wird eine Kamera mit einer zugeordneten Beleuchtungsquelle verwendet. Die Kamera und die Beleuchtungsquelle sind jedoch nicht unabhängig voneinander bewegbar.

Die CN 102 590 150 A offenbart ein Verfahren zur Bestimmung einer hyperspektralen bidirektionalen Reflexionsverteilungsfunktion. Das System umfasst eine Lichtquelle, wobei die Lichtquelle mittels eines Befestigungsstabes und einer halbkreisförmigen Schiene bewegt werden kann. Hierbei ist jedoch nur eine Lichtquelle an dem halbkreisförmigen Bogen befestigt.

Die KR 101 185 327 B offenbart einen rotierbaren bogenförmigen Kamerahalter. Hierbei kann eine (geografische) Breite der Kamera entlang des Bogens verändert werden.

Die US 6,974,964 B1 offenbart eine Vorrichtung und ein Verfahren zur Erfassung und Sammeln von Daten relativ zu einer Position eines sich bewegenden Objekts. Hierbei kann die Vorrichtung zwei Lichtquellen und vier flächige Bildsensoren umfassen.

Die US 4,894,551 B1 offenbart eine Messvorrichtung zum Messen von Schnittformen eines Objekts. Die Vorrichtung umfasst eine Mehrzahl von Detektoren für Licht, welches von der Oberfläche des Objekts reflektiert wird und eine Vielzahl von optischen Fasern mit Fokussierungslinsen und Lichtquellen an gegenüberliegenden Enden, um einen Abstand von einer Referenzachse zu einer Oberfläche des Objekts zu erfassen.

Die DE 20 2013 000 050 U1 offenbart eine Vorrichtung zum dreidimensionalen Erfassen der Oberfläche eines Kraftfahrzeugs.

Die DE 100 25 741 A1 offenbart ein Verfahren zur berührungslosen Bestimmung der räumlichen Koordinaten von Gegenständen und/oder deren zeitlicher Änderung.

Es stellt sich das technische Problem, eine Vorrichtung und ein Verfahren zur Erfassung eines Objekts zu schaffen, die eine zeitlich schnelle und qualitativ hochwertige Erfassung des Objektes ermöglichen.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

Vorgeschlagen wird eine Vorrichtung zur Erfassung eines Objekts. Die Erfassung bezeichnet hierbei insbesondere eine optische Erfassung von Eigenschaften des Objekts. Eigenschaften können z.B. geometrische Eigenschaften, insbesondere eine dreidimensionale Geometrie, eine Textur und/oder Materialeigenschaften des Objekts sein. Insbesondere kann das Objekt ein dreidimensionales Objekt sein.

Die Vorrichtung umfasst ein erstes kreisbogenförmiges Tragelement. Das erste kreisbogenförmige Tragelement kann hierbei einen kreisbogenförmigen Teilabschnitt eines ersten Tragelements bezeichnen, welches zusätzlich zu dem kreisbogenförmigen Teilabschnitt auch noch weitere Teilabschnitte, z.B. gerade Endabschnitte, umfassen kann. Allerdings kann das erste Tragelement auch ausschließlich aus dem erstenkreisbogenförmigen Tragelement bestehen.

An dem ersten kreisbogenförmigen Tragelement ist eine Anzahl von Bilderfassungseinrichtungen angeordnet. Somit sind also mehr als zwei Bilderfassungseinrichtungen an dem ersten kreisbogenförmigen Tragelement angeordnet. Die Bilderfassungseinrichtungen können hierbei mechanisch unmittelbar an dem ersten kreisbogenförmigen Tragelement befestigt sein. Selbstverständlich können die Bilderfassungseinrichtungen auch mittelbar, d.h. z.B. über mechanische Verbindungselemente, an dem ersten kreisbogenförmigen Tragelement befestigt sein. Die Bilderfassungseinrichtungen können hierbei ausschließlich in einer vorbestimmten Position und/oder mit einer vorbestimmten Orientierung an dem weiteren kreisbogenförmigen Tragelement befestigt sein. Allerdings können die Bilderfassungseinrichtungen auch derart lösbar an dem ersten kreisbogenförmigen Tragelement befestigt sein, dass eine Position und/oder Orientierung der Bilderfassungseinrichtungen in einem gelösten Zustand veränderbar ist und in einem fixierten Zustand festgelegt ist. Im Sinne dieser Erfindung umfasst der Begriff Bilderfassungseinrichtung jede Einrichtung, die in Abhängigkeit von optischen Eingangssignalen elektrische Ausgangssignale erzeugen kann. Insbesondere sind die Bilderfassungseinrichtung Bilderfassungseinrichtungen mit sogenannten Matrixsensoren, die die Erfassung einer Intensität von Lichtstrahlen aus einem Erfassungsbereich der entsprechenden Bilderfassungseinrichtung ermöglichen. So kann eine Bilderfassungseinrichtung beispielsweise eine Kamera sein, insbesondere eine Kamera mit einem CCD-Sensor oder CMOS-Sensor. Die Bilderfassungseinrichtungen können hierbei Licht in einem sichtbaren Wellenlängenbereich oder auch in einem nichtsichtbaren Wellenlängenbereich erfassen.

Weiter ist das erste kreisbogenförmige Tragelement um eine erste Rotationsachse rotierbar. In jeder Winkelposition bildet das erste kreisbogenförmige Tragelement, insbesondere eine zentrale Mittellinie des ersten kreisbogenförmigen Tragelements, einen Kreisbogen eines Kreises, also einen Teil einer vollständigen Kreislinie des Kreises, der somit ebenfalls um die erste Rotationsachse rotierbar ist. Die erste Rotationsachse ist vorzugsweise eine Zentrale dieses Kreises, wobei die Zentrale eine Gerade durch den Mittelpunkt des Kreises bezeichnet. Weiter kann die zentrale (bogenförmige) Mittellinie des ersten kreisbogenförmigen Tragelements an mindestens einem, insbesondere freien, Ende des ersten kreisbogenförmigen Tragelements die Rotationsachse in einem Schnittpunkt schneiden. Bildlich gesprochen bedeutet dies, dass zumindest ein Ende des ersten kreisbogenförmigen Tragelements auf der Rotationsachse liegt.

Das erste kreisbogenförmige Tragelement und somit auch die Bilderfassungseinrichtungen sind daher entlang einer Kugeloberfläche oder eines Teils der Kugeloberfläche eines ersten Kugelvolumens bewegbar.

Die Bilderfassungseinrichtungen sind äquiangular an dem ersten kreisbogenförmigen Tragelement angeordnet. Äquiangular bedeutet, dass ein Winkelabstand zwischen allen entlang des ersten kreisbogenförmigen Tragelements benachbarten Bilderfassungseinrichtungen gleich ist. Der Winkelabstand kann hierbei z.B. durch einen Mittelpunktswinkel angegeben werden, wobei der Mittelpunktswinkel durch zwei Radiallinien eingefasst wird, die jeweils durch den Mittelpunkt und den Anordnungspunkt benachbarter Bilderfassungseinrichtungen an dem ersten kreisbogenförmigen Tragelement verlaufen. Dass die Bilderfassungseinrichtungen äquiangular an dem ersten kreisbogenförmigen Tragelement angeordnet sind, kann auch Ausführungsformen einschließen, bei denen die Winkelabstände zwischen verschiedenen entlang des ersten kreisbogenförmigen Tragelements benachbarten Bilderfassungseinrichtungen nicht exakt gleich sind. Z.B. können auch Ausführungsformen eingeschlossen sein, bei denen die verschiedenen Winkelabstände, insbesondere benachbarte Winkelabstände und/oder ein minimaler Winkelabstand und ein maximaler Winkelabstand aller Winkelabstände, nicht mehr als eine maximale, z.B. toleranzbedingte, Differenz, beispielsweise nicht mehr als 1 °, 2°, 3°, 4° oder 5°, voneinander abweichen.

Weiter umfasst die Vorrichtung mindestens ein weiteres kreisbogenförmiges Tragelement. Das weitere kreisbogenförmige Tragelement kann hierbei einen kreisbogenförmigen Teilabschnitt eines weiteren Tragelements bezeichnen, welches zusätzlich zu dem kreisbogenförmigen Teilabschnitt auch noch weitere Teilabschnitte, z.B. gerade Endabschnitte, umfassen kann. Allerdings kann das weitere Tragelement auch ausschließlich aus dem weiteren kreisbogenförmigen Tragelement bestehen.

Eine Anzahl von Lichtquellen ist an dem mindestens einen weiteren kreisbogenförmigen Tragelement angeordnet. Somit sind also mehr als zwei Lichtquellen an dem weiteren kreisbogenförmigen Tragelement angeordnet. Insbesondere können die Lichtquellen, wie vorhergehend in Bezug auf die Bilderfassungseinrichtungen bereits erläutert, unmittelbar oder mittelbar an dem weiteren kreisbogenförmigen Tragelement mechanisch befestigt sein. Die Lichtquellen können hierbei ausschließlich in einer vorbestimmten Position und/oder mit einer vorbestimmten Orientierung an dem weiteren kreisbogenförmigen Tragelement befestigt sein. Auch in diesem Fall ist aber eine lösbare mechanische Verbindung vorstellbar, sodass eine Position und/oder Orientierung der Lichtquellen in einem gelösten Zustand veränderbar sind und in einem fixierten Zustand festgelegt sind.

Auch die Lichtquellen sind entlang des mindestens einen weiteren kreisbogenförmigen Tragelements äquiangular angeordnet. Dass die Lichtquellen äquiangular an dem weiteren kreisbogenförmigen Tragelement angeordnet sind, kann auch Ausführungsformen einschließen, bei denen die Winkelabstände zwischen verschiedenen entlang des Weiteren kreisbogenförmigen Tragelements benachbarten Lichtquellen nicht exakt gleich sind. Z.B. können auch Ausführungsformen eingeschlossen sein, bei denen die verschiedenen Winkelabstände, insbesondere benachbarte Winkelabstände und/oder ein minimaler Winkelabstand und ein maximaler Winkelabstand aller Winkelabstände, nicht mehr als eine maximale, z.B. toleranzbedingte, Differenz, beispielsweise nicht mehr als 1 °, 2°, 3°, 4° oder 5°, voneinander abweichen.

Im Sinne dieser Erfindung umfasst der Begriff Lichtquelle alle Einrichtungen zur Erzeugung von elektromagnetischen Wellen. Insbesondere kann eine Lichtquelle jedoch Licht im sichtbaren Wellenlängenbereich erzeugen. Selbstverständlich ist es aber auch vorstellbar, dass die Lichtquelle Licht im nicht sichtbaren Wellenlängenbereich erzeugt.

Das mindestens eine weitere kreisbogenförmige Tragelement ist um eine weitere Rotationsachse rotierbar. In jeder Winkelposition bildet das mindestens eine weitere kreisbogenförmige Tragelement, insbesondere eine zentrale Mittellinie des mindestens einen weiteren kreisbogenförmigen Tragelements, einen Kreisbogen eines Kreises, also einen Teil einer vollständigen Kreislinie des Kreises, der somit ebenfalls um die weitere Rotationsachse rotierbar ist. Die weitere Rotationsachse kann eine Zentrale dieses Kreises sein. Auch kann die zentrale Mittellinie des Weiteren kreisbogenförmigen Tragelements die Rotationsachse an mindestens einem, insbesondere freien, Ende des Weiteren kreisbogenförmigen Tragelements in einem Schnittpunkt schneiden.

Somit sind das weitere kreisbogenförmige Tragelement und auch die Lichtquellen entlang einer Kugeloberfläche oder eines Teils der Kugeloberfläche eines zweiten Kugelvolumens bewegbar.

Weiter schneiden sich die erste Rotationsachse und die weitere Rotationsachse in mindestens einem Schnittpunkt. Wie nachfolgend noch näher erläutert, umfasst dies, dass sich Rotationsachsen auch überlagern können, also mehr als einen Schnittpunkt, insbesondere unendliche viele Schnittpunkte, aufweisen können.

Das Merkmal, dass sich die erste und weitere Rotationsachse schneiden umfasst selbstverständlich auch Ausführungsformen, bei denen, z.B. aufgrund von Fertigungstoleranzen und/oder weiteren Rahmenbedingungen, eine unerwünschte Abweichung zwischen der ersten und der weiteren Rotationsachse auftritt. Somit bedeutet das Merkmal, dass sich die Rotationsachsen idealerweise in mindestens einem Schnittpunkt schneiden, auch wenn dies z.B. aufgrund von Fertigungstoleranzen oder weiteren Umgebungseinflüssen in einer konkreten mechanischen Ausführungsform nicht der Fall ist.

Vorzugsweise schneiden sich die erste Rotationsachse und die weitere Rotationsachse (idealerweise) in den jeweiligen Mittelpunkten der kreisbogenförmigen Tragelemente. Dies bedeutet anschaulich, dass sich die Mittelpunkte der kreisbogenförmigen Tragelemente und somit auch der vorhergehend erläuterten Kugelvolumina überlagern.

Das erste und das mindestens eine weitere kreisbogenförmige Tragelement können hierbei voneinander verschiedene Radien aufweisen. Insbesondere kann das erste kreisbogenförmige Tragelement einen größeren Radius als das mindestens eine weitere kreisbogenförmige Tragelement aufweisen. In diesem Fall umfasst das erste Kugelvolumen das weitere Kugelvolumen. Allerdings kann auch das mindestens eine weitere kreisbogenförmige Tragelement einen größeren Radius als das erste kreisbogenförmige Tragelement aufweisen. Die Radien des ersten und des mindestens einen weiteren kreisbogenförmigen Tragelements können insbesondere derart gewählt sein, dass eine ungehinderte und unabhängige Bewegung des ersten und des mindestens einen weiteren kreisbogenförmigen Tragelements um die jeweilige Rotationsachse gewährleistet ist.

Weiter kann/können mindestens eine Bilderfassungseinrichtung, vorzugsweise jedoch alle Bilderfassungseinrichtungen, hin zum Mittelpunkt des ersten kreisbogenförmigen Tragelements ausgerichtet sein. Dies bedeutet, dass zentrale optische Achsen der hin zum Mittelpunkt des ersten kreisbogenförmigen Tragelements ausgerichteten Bilderfassungseinrichtungen diesen Mittelpunkt (idealerweise) schneiden. Eine zentrale optische Achse kann hierbei eine zentrale Mittellinie eines Erfassungsbereichs, beispielsweise eines kegel- oder kegelstumpfförmigen Erfassungsbereichs, der Bilderfassungseinrichtung bezeichnen. Entsprechend kann/können mindestens eine Lichtquelle, vorzugsweise jedoch alle Lichtquellen, hin zum Mittelpunkt des mindestens einen weiteren kreisbogenförmigen Tragelements ausgerichtet sein. Dies bedeutet, dass zentrale Strahlachsen der hin zum Mittelpunkt ausgerichteten Lichtquellen den Mittelpunkt des Weiteren kreisbogenförmigen Tragelements (idealerweise) schneiden. Die zentrale Strahlachse kann hierbei insbesondere eine zentrale Mittellinie eines Beleuchtungsbereiches, beispielsweise eines kegel- oder kegelstumpfförmigen Beleuchtungsbereichs, der Lichtquelle sein.

Die kreisbogenförmigen Tragelemente können jeweils beweglich gelagert sein, beispielsweise an mindestens einem, insbesondere freien, Ende, vorzugsweise jedoch an beiden Enden.

Die Anzahl von Bilderfassungseinrichtungen kann gleich der Anzahl von Lichtquellen sein. Selbstverständlich können jedoch auch mehr oder weniger Bilderfassungseinrichtungen als Lichtquellen verwendet werden.

Bevorzugt sind alle Bilderfassungseinrichtungen derart an dem ersten kreisbogenförmigen Tragelement angeordnet, dass die Abstände der Bilderfassungseinrichtungen vom Mittelpunkt des ersten kreisbogenförmigen Tragelements gleich sind. Entsprechend können auch alle Lichtquellen derart entlang des mindestens einen weiteren kreisbogenförmigen Tragelements angeordnet sein, dass Abstände der Lichtquellen vom Mittelpunkt des Weiteren kreisbogenförmigen Tragelements gleich sind.

Somit kann in vorteilhafter Weise ein zu erfassendes Objekt im Kugelvolumen mit dem kleineren Radius angeordnet werden. Hiernach können sowohl das erste kreisbogenförmige Tragelement und somit die Bilderfassungseinrichtungen als auch das weitere kreisbogenförmige Tragelement und somit auch die Lichtquellen auf den ihnen jeweils zugeordneten (Abschnitten der) Kugeloberflächen um das Objekt herum bewegt werden. Dies ermöglicht in vorteilhafter Weise eine Erfassung (zumindest eines Teils) des Objekts aus einer Vielzahl von Erfassungspositionen und mit verschiedenen Erfassungsrichtungen sowie eine Beleuchtung des Objektes aus einer Vielzahl von Beleuchtungspositionen und mit verschiedenen Beleuchtungsrichtungen. Dies wiederum ermöglicht in vorteilhafter Weise eine qualitativ hochwertige, gleichzeitig jedoch schnelle, optische Erfassung des Objektes.

Insbesondere können 9 oder mehr als 9 Bilderfassungseinrichtungen an dem ersten kreisbogenförmigen Tragelement angeordnet sein. Auch können 9 oder mehr als 9 Lichtquellen an dem weiteren kreisbogenförmigen Tragelement angeordnet sein. Die maximale Anzahl an anordenbaren Bilderfassungseinrichtungen bzw. Lichtquellen ergibt sich aus der geometrischen Größe der Bilderfassungseinrichtungen bzw. Lichtquellen sowie der Länge des jeweiligen kreisbogenförmigen Tragelements.

Die erreichbare Qualität der geometrischen Eigenschaften als auch der Materialeigenschaften steigt jedoch mit der Anzahl an Bilderfassungseinrichtungen bzw. Lichtquellen.

In einer weiteren Ausführungsform ist die Anzahl der Lichtquellen gleich der Anzahl von Bilderfassungseinrichtungen.

In einer weiteren Ausführungsform sind die Bilderfassungseinrichtungen an dem ersten kreisbogenförmigen Tragelement und die Lichtquellen an dem weiteren kreisbogenförmigen Tragelement derart angeordnet, dass in mindestens einer Winkelposition, vorzugsweise in allen Winkelpositionen, des ersten kreisbogenförmigen Tragelements das weitere kreisbogenförmige Tragelement derart positionierbar ist, dass mindestens eine Bilderfassungseinrichtung und mindestens eine Lichtquelle auf einer Radiallinie angeordnet sind. Die Radiallinie kann sich hierbei auf die vorhergehend erläuterten Mittelpunkte beziehen, insbesondere sich überlagernden Mittepunkte des ersten und weiteren kreisbogenförmigen Tragelements und kann auch als gemeinsame Radiallinie bezeichnet werden. Somit kann also das erste kreisbogenförmige Tragelement und das weitere kreisbogenförmige Tragelement jeweils an einer Winkelposition angeordnet werden, wobei an diesen Winkelpositionen mindestens eine Bilderfassungseinrichtung und mindestens eine Lichtquelle auf der Radiallinie angeordnet sind. Hierbei kann die Bilderfassungseinrichtung weiter als die Lichtquelle vom Mittelpunkt entfernt angeordnet sein.

Bei einer Anordnung der Lichtquelle und der Bilderfassungseinrichtung auf einer Radiallinie können sich die zentrale optische Achse der Bilderfassungseinrichtung und die zentrale Strahlachse der Lichtquelle überlagern, insbesondere also kollinear angeordnet sein. Die zentrale optische Achse und die zentrale Strahlachse können hierbei auf der Radiallinie angeordnet sein, insbesondere diese überlagern.

Vorzugsweise ist in mindestens einer Winkelposition, vorzugsweise in allen Winkelpositionen, des ersten kreisbogenförmigen Tragelements das weitere kreisbogenförmige Tragelement derart positionierbar, dass auf jeder Radiallinie, auf der eine Bilderfassungseinrichtung angeordnet ist, auch eine Lichtquelle angeordnet ist und/oder dass auf jeder Radiallinie, auf der eine Lichtquelle angeordnet ist, auch eine Bilderfassungseinrichtung angeordnet ist.

Vorzugsweise können die Winkelabstände zwischen den entlang des ersten kreisbogenförmigen Tragelements äquiangular angeordneten Bilderfassungseinrichtungen gleich den Winkelabständen zwischen den entlang des Weiteren kreisbogenförmigen Tragelements äquiangular angeordneten Lichtquellen sein. Auch Winkelpositionen der entlang des ersten kreisbogenförmigen Tragelements äquiangular angeordneten Bilderfassungseinrichtungen und Winkelpositionen der entlang des Weiteren kreisbogenförmigen Tragelements äquiangular angeordneten Lichtquellen, die insbesondere auf ein gemeinsames Referenzkoordinatensystem der Tragelemente bezogen sein können, können gleich sein.

In einer bevorzugten Ausführungsform ist das erste kreisbogenförmige Tragelement halbkreisförmig ausgebildet. In einer solchen Ausführungsform kann das erste kreisbogenförmige Tragelement an beiden, insbesondere freien, Enden beweglich gelagert sein. Z.B. können die Enden beweglich, insbesondere rotierbar, gelagert sein. Insbesondere können die Endpunkte der zentralen Mittellinie des ersten kreisbogenförmigen Tragelements an den beiden freien Enden jeweils die Rotationsachse des ersten kreisbogenförmigen Tragelements schneiden.

Alternativ oder kumulativ kann auch das mindestens eine weitere kreisbogenförmige Tragelement halbkreisförmig ausgebildet sein. Auch das weitere kreisbogenförmige Tragelement kann vorzugsweise an beiden, insbesondere freien, Enden beweglich, insbesondere rotierbar, gelagert sein.

Selbstverständlich ist die Erfindung jedoch nicht auf halbkreisförmige Tragelemente beschränkt. Insbesondere kann mindestens eines der kreisbogenförmigen Tragelemente auch als Kreisbogensegment mit einem vorbestimmten Mittelpunktswinkel größer als 0° und kleiner gleich 360° ausgebildet sein. Auch ist es vorstellbar, mindestens eines der kreisbogenförmigen Tragelemente vierteilkreisförmig oder sogar vollkreisförmig auszubilden.

In einer weiter bevorzugten Ausführungsform überlagern sich die erste und die weitere Rotationsachse. Dies kann bedeuten, dass die erste und weitere Rotationsachse kollinear angeordnet sind und aufeinander liegen. Auch können das erste und das weitere kreisbogenförmige Tragelement jeweils entlang einer Halbkugeloberfläche bewegbar sein, wobei die gemeinsame Rotationsachse in einer Grundkreisfläche der jeweiligen Halbkugel liegt. Hierdurch ergibt sich in vorteilhafter Weise eine auf die Erfassung mittels der Bilderfassungseinrichtungen abgestimmte Beleuchtung, wodurch eine Qualität der Erfassung verbessert wird.

In einer weiteren Ausführungsform ist das erste kreisbogenförmige Tragelement durch mindestens einen ersten Aktor bewegbar. Selbstverständlich kann das erste kreisbogenförmige Tragelement auch durch einen ersten und einen zweiten Aktor bewegbar sein. Z.B. kann der mindestens eine Aktor derart mit dem ersten kreisbogenförmigen Tragelement mechanisch gekoppelt sein, dass das erste kreisbogenförmige Tragelement durch den oder mittels des Aktors um die erste Rotationsachse bewegbar ist. Als Aktor wird im Sinne dieser Erfindung jede Einrichtung zur Erzeugung einer Antriebskraft oder -energie verstanden, wobei durch die Antriebskraft oder -energie die Bewegung des ersten kreisbogenförmigen Tragelements um die erste Rotationsachse bewirkt werden kann.

Ist das erste kreisbogenförmige Tragelement z.B. halbkreisförmig ausgebildet, so kann ein erster Aktor mit einem ersten, insbesondere freien, Ende des ersten kreisbogenförmigen Tragelements und/oder ein zweiter Aktor mit einem zweiten, insbesondere freien, Ende des ersten kreisbogenförmigen Tragelements gekoppelt sein.

Entsprechend ist das mindestens eine weitere kreisbogenförmige Tragelement durch mindestens einen weiteren Aktor bewegbar. Entsprechend dem ersten kreisbogenförmigen Tragelement kann auch das weitere kreisbogenförmige Tragelement durch mehrere, insbesondere zwei, Aktoren bewegbar sein. Ist auch das mindestens eine weitere kreisbogenförmige Tragelement halbkreisförmig ausgebildet, so kann ein erster Aktor mit dem ersten, insbesondere freien, Ende des Weiteren kreisbogenförmigen Tragelements und/oder ein zweiter Aktor mit dem zweiten, insbesondere freien, Ende des Weiteren kreisbogenförmigen Tragelements gekoppelt sein.

Hierdurch ergibt sich in vorteilhafter Weise, dass die kreisbogenförmigen Tragelemente unabhängig voneinander, jedoch mit einer hohen Genauigkeit, bewegt werden können.

In einer weiteren Ausführungsform ist das erste kreisbogenförmige Tragelement in mindestens eine vorbestimmte Anzahl von verschiedenen Winkelpositionen relativ zur ersten Rotationsachse bewegbar.

Alternativ oder kumulativ ist das mindestens eine weitere kreisbogenförmige Tragelement in mindestens eine vorbestimmte Anzahl von verschiedenen Winkelpositionen relativ zur weiteren Rotationsachse bewegbar.

Ein Referenzkoordinatensystem für die Bewegung des ersten kreisbogenförmigen Tragelements kann z.B. wie folgt definiert werden. Ein Ursprung des Referenzkoordinatensystems kann im Schnittpunkt der ersten und zweiten Rotationsachse angeordnet sein. Eine longitudinale Achse (x-Achse) kann sich entlang der ersten Rotationsachse erstrecken. Eine vertikale Achse (z-Achse) kann in einer vertikalen Richtung orientiert sein, wobei eine vertikale Richtung beispielsweise entgegengesetzt zu einer Richtung einer Gewichtskraft orientiert ist. Auch kann die vertikale Richtung senkrecht zu einer, nachfolgend noch erläuterten, Oberfläche eines Objektträgers orientiert sein. Eine laterale Richtung (y-Richtung) kann senkrecht zu der longitudinalen Richtung und vertikalen Richtung orientiert sein.

Entsprechend kann ein Referenzkoordinatensystem für eine Bewegung des Weiteren kreisbogenförmigen Tragelements definiert sein, wobei sich die longitudinale Achse dieses Referenzkoordinatensystems entlang der zweiten Rotationsachse erstreckt.

Eine Referenz- oder Nulllage kann beispielsweise gegeben sein, falls die vorhergehend erläuterte vertikale Achse das entsprechende kreisbogenförmige Tragelement schneidet. Dieser Referenzlage kann eine Winkelposition von 0° zugeordnet sein. In Winkelpositionen von +/-90° schneidet somit die laterale Achse des Referenzkoordinatensystems das entsprechende kreisbogenförmige Tragelement.

Ist das erste und das weitere kreisbogenförmige Tragelement halbkreisförmig ausgebildet und sind jeweils N1 Bilderfassungseinrichtungen und N2 Lichtquellen an den jeweiligen Tragelementen angeordnet und kann jedes dieser Tragelemente in M Winkelpositionen bewegt werden, so ergeben sich N1 x M Erfassungspositionen und N2 x M Beleuchtungspositionen.

Vorzugsweise ist eine Anzahl und gegebenenfalls auch ein Winkelabstand von Bilderfassungseinrichtungen und/oder Lichtquellen sowie eine Anzahl und gegebenenfalls auch ein Winkelabstand von Winkelpositionen des ersten bogenförmigen Tragelements und/oder des mindestens einen weiteren bogenförmigen Tragelements derart gewählt, dass Beleuchtungspositionen und/oder Erfassungspositionen äquiangular in zwei Dimensionen auf der entsprechenden Kugeloberfläche verteilt sind.

Weiter können die vorbestimmten Winkelpositionen, in die das erste kreisbogenförmige Tragelement bewegt werden kann, gleich den vorbestimmten Winkelpositionen gewählt werden, in die das weitere kreisbogenförmige Tragelement bewegt werden kann. Dies ist insbesondere für die Ausführungsform relevant, in der sich die erste und die zweite Rotationsachse überlagern. In diesem Fall entspricht das Referenzkoordinatensystem für die Bewegung des ersten kreisbogenförmigen Tragelements dem Referenzkoordinatensystem für die Bewegung des mindestens einen weiteren kreisbogenförmigen Tragelements und kann als gemeinsames Referenzkoordinatensystem bezeichnet werden.

Auch können die vorbestimmten Winkelpositionen der beiden kreisbogenförmigen Tragelemente verschieden voneinander gewählt werden. In diesem Fall ergibt sich in vorteilhafter Weise keine oder nur eine geringe Verdeckung der Erfassungseinrichtungen durch die Lichtquellen oder umgekehrt.

Die Anzahl von verschiedenen vorbestimmten Winkelpositionen des entsprechenden kreisbogenförmigen Tragelements können beispielsweise diskrete Winkelpositionen sein. Dies bedeutet, dass die kreisbogenförmigen Tragelemente, z.B. durch den ihnen zugeordneten Aktor, ausschließlich in diese diskreten Winkelpositionen bewegbar sind. Beispielsweise können die Aktoren als Schrittmotoren ausgebildet sein, wobei einzelne Schritte der Schrittmotoren einzelnen diskreten Winkelpositionen des entsprechenden kreisbogenförmigen Tragelements entsprechen.

In einer bevorzugten Ausführungsform sind die Lichtquellen als Ringlichter ausgebildet. Ein Ringlicht weist hierbei eine zentrale Öffnung auf, wobei die Lichtquelle zumindest um einen Teil der zentralen Öffnung herum, beispielsweise entlang eines Umfangs der zentralen Öffnung, angeordnet ist. Unter einem Ringlicht wird in diesem Falle aber nicht zwingend eine Lichtquelle mit einer kreis- oder zylinderförmigen zentralen Öffnung verstanden. Insbesondere kann ein Ringlicht auch eine rechteckförmige oder quaderförmige zentrale Öffnung aufweisen.

Weist das Ringlicht jedoch eine kreis- oder zylinderförmige zentrale Öffnung auf, so ist vorzugsweise ein Radius dieser Öffnung gleich einem oder größer als ein maximales Abmaß eines Erfassungsbereiches einer Bilderfassungseinrichtung in einem Querschnitt durch diesen Erfassungsbereich, falls sich die zentrale optische Achse der Bilderfassungseinrichtung und die zentrale Strahlachse der Lichtquelle überlagern, wobei ein Mittelpunkt der zentralen Öffnung des Ringlichts in der Querschnittsebene angeordnet ist und die Querschnittsebene senkrecht zur zentralen optischen Achse der Bilderfassungseinrichtung orientiert ist. Der Mittelpunkt der zentralen Öffnung des Ringlichts kann hierbei ein Mittelpunkt einer kreisförmig ausgebildeten Öffnung sein oder auf einer zentralen Mittelachse einer zylinderförmigen Öffnung liegen.

Insbesondere können die kreisbogenförmigen Tragelemente derart bewegbar sein, dass Mittelpunkte der zentralen Öffnungen der Ringlichter jeweils auf zentralen optischen Achsen je einer Bilderfassungseinrichtung angeordnet werden können. Insbesondere können also Winkelpositionen, beispielsweise die vorhergehend erläuterten diskreten Winkelpositionen, entsprechend gewählt werden. In diesem Falle ist eine synchrone Bewegung der kreisbogenförmigen Tragelemente denkbar, wodurch in vorteilhafter Weise eine Erfassung des Objektes durch die Bilderfassungseinrichtungen nicht durch die als Ringlicht ausgebildeten Lichtquellen behindert wird.

Die Ausbildung der Lichtquellen als Ringlichter kann hierbei auch unabhängig von einer äquiangularen Anordnung der Bilderfassungseinrichtungen und äquiangularen Anordnung der Lichtquellen erfolgen.

Somit wird eine Vorrichtung zur Erfassung eines Objekts beschrieben, wobei die Vorrichtung ein erstes kreisbogenförmiges Tragelement umfasst, wobei eine Anzahl von Bilderfassungseinrichtungen an dem ersten kreisbogenförmigen Tragelement angeordnet ist, wobei das erste kreisbogenförmige Tragelement um eine erste Rotationsachse rotierbar ist, wobei die Vorrichtung mindestens ein weiteres kreisbogenförmiges Tragelement umfasst, wobei eine Anzahl von Lichtquellen an dem mindestens einen weiteren kreisbogenförmigen Tragelement angeordnet ist, wobei das mindestens eine weitere kreisbogenförmige Tragelement um eine weitere Rotationsachse rotierbar ist, wobei sich die erste Rotationsachse und die weitere Rotationsachse in mindestens einem Schnittpunkt schneiden. Weiter sind die Lichtquellen als Ringlichter ausgebildet. Diese Vorrichtung kann hierbei ebenfalls gemäß den vorhergehend und nachfolgend beschriebenen Aspekten und Ausführungsformen weitergebildet sein. Insbesondere sind auch hierbei mindestens zwei Bilderfassungseinrichtungen an dem ersten kreisbogenförmigen Tragelement und mindestens zwei Lichtquellen an dem weiteren kreisbogenförmigen Tragelement angeordnet.

Die Vorrichtung kann weiter einen Objektträger umfassen, wobei ein zu erfassendes Objekt auf einer Oberfläche des Objektträgers angeordnet werden kann. Der Objektträger kann insbesondere derart angeordnet werden, dass mindestens eine der Rotationsachsen, insbesondere jedoch beide Rotationsachsen, in einer Oberflächenebene des Objektträgers verlaufen. Auch kann der Objektträger derart angeordnet sein, dass der vorhergehend erläuterte Schnittpunkt der ersten und der zweiten Rotationsachse in einer Oberflächenebene angeordnet ist.

Weiter kann die Vorrichtung eine Einrichtung zum Bewegen des Objektträgers bzw. des Objektes umfassen. Beispielsweise kann der Objektträger als Förderband ausgebildet oder auf einem Förderband angeordnet sein.

Ergebnisse von praktische Testläufe haben gezeigt, dass die zusätzlich zu der Bestimmung von geometrischen Eigenschaften gewünschte Bestimmung von Materialinformationen insbesondere dann mit ausreichender Zuverlässigkeit und Qualität möglich ist, wenn
a) sowohl Erfassungspositionen (=Positionen der Bilderfassungseinrichtungen) als auch Beleuchtungspositionen (=Positionen der Lichtquellen) in ausreichend und in gleichmäßig verteilter Stückzahl auf einer Hemisphäre um das zu erfassende Objekt anordenbar sind, insbesondere derart, dass die einstellbaren Positionen die Hemisphäre ausreichend dicht und gleichmäßig abdecken,
b) die Erfassungspositionen als auch die Beleuchtungspositionen auf den jeweiligen Hemisphären vollständig unabhängig voneinander einstellbar sind, insbesondere also jede Position der Menge an erreichbaren Erfassungspositionen mit einer beliebigen Position der Menge an erreichbaren Beleuchtungspositionen und umgekehrt kombiniert werden kann,
c) insbesondere auch für jede erreichbare Beleuchtungsposition/Erfassungsposition die jeweils andere Position bezogen auf den Mittelpunkt der Hemisphäre auf derselben Radiallinie derart angeordnet werden kann, dass es für jede Erfassungsposition genau eine Beleuchtungsposition gibt, in der ein Lichtkegel entlang der zentralen optischen Achse der Bilderfassungseinrichtung ungehindert das Objekt im Zentrum beleuchtet ohne dass das Sichtfeld der Bilderfassungseinrichtung durch die Lichtquelle beeinträchtigt wird.

Weiter vorgeschlagen wird ein Verfahren zur Erfassung eines Objekts mittels einer der Vorrichtungen nach einer der vorhergehend erläuterten Ausführungsformen.

Erfindungsgemäß wird mindestens ein Beleuchtungszustand eingestellt, wobei ein Beleuchtungszustand durch eine Einstellung einer Winkelposition des mindestens einen weiteren kreisbogenförmigen Tragelements und durch eine Einstellung eines Aktivierungszustandes mindestens einer Lichtquelle eingestellt wird. Somit ist ein Beleuchtungszustand also durch eine Winkelposition des Weiteren kreisbogenförmigen Tragelements und durch einen Aktivierungszustand der Lichtquellen definiert. Die Winkelposition wird hierbei relativ zur jeweiligen Rotationsachse bzw. zur longitudinalen Achse des vorhergehend erläuterten Referenzkoordinatensystems gemessen. Die Winkelposition kann hierbei durch einen Rotationswinkel bezogen auf diese Rotationsachse angegeben sein.

Weiter wird mindestens ein Abbildungszustand eingestellt, wobei der Abbildungszustand durch eine Einstellung einer Winkelposition des ersten kreisbogenförmigen Tragelements und durch eine Einstellung eines Aktivierungszustandes mindestens einer der Bilderfassungseinrichtungen eingestellt wird. Somit ist also der Abbildungszustand durch die Winkelposition des ersten kreisbogenförmigen Tragelements und durch den Aktivierungszustand der Bilderfassungseinrichtungen definiert.

Im eingestellten Beleuchtungszustand und Abbildungszustand wird durch die aktivierten Bilderfassungseinrichtungen jeweils eine Abbildung erzeugt.

Umfasst die Vorrichtung z.B. N Bilderfassungseinrichtungen und sind im Abbildungszustand alle Bilderfassungseinrichtungen aktiviert, so werden in einem vorbestimmten Beleuchtungszustand und einem vorbestimmten Abbildungszustand N Abbilder erzeugt. Diese können z.B. in einer Speichereinrichtung gespeichert werden. Vorzugsweise werden sowohl die erzeugten Abbilder als auch die den Abbildern zugeordneten Beleuchtungs- und Abbildungszustände gespeichert. Dies ermöglicht in vorteilhafter Weise eine einfache Rekonstruktion von geometrischen Eigenschaften sowie eine einfache Bestimmung von Texturen und Materialeigenschaften, was nachfolgend noch näher erläutert wird.

Selbstverständlich kann in einem Vorbereitungsschritt das zu erfassende Objekt in einem der vorhergehend erläuterten Kugelvolumina, insbesondere in dem Kugelvolumen mit dem kleineren Radius, angeordnet werden. Dieses Kugelvolumen kann einem Erfassungsvolumen der Vorrichtung entsprechen oder diese Erfassungsvolumen enthalten.

Ebenfalls können sowohl das erste kreisbogenförmige Tragelement als auch das mindestens eine weitere kreisbogenförmige Tragelement in eine Ausgangswinkelposition bewegt werden. Die Ausgangswinkelposition kann beispielsweise durch eine Winkelposition von +90°, 0° oder -90° bezogen auf das vorhergehend erläuterte Referenzkoordinatensystem des entsprechenden kreisbogenförmigen Tragelements gegeben sein.

In einer bevorzugten Ausführungsform wird/werden eine vorbestimmte Anzahl von voneinander verschiedenen Abbildungszuständen und/oder eine vorbestimmte Anzahl von voneinander verschiedenen Beleuchtungszuständen eingestellt, wobei in jedem eingestellten Beleuchtungszustand und Abbildungszustand durch die aktivierten Bilderfassungseinrichtungen jeweils eine Abbildung erzeugt wird.

Vorzugsweise sind in jedem Abbildungszustand alle Bilderfassungseinrichtungen aktiviert. Je nach Anzahl der Abbildungszustände und der Beleuchtungszustände ergibt sich somit in vorteilhafter Weise eine große Anzahl von Abbildungen aus verschiedenen Betrachtungsrichtungen, die nachfolgend eine Erfassung des Objektes mit hoher Qualität ermöglichen.

In einer bevorzugten Ausführungsform wird eine Anzahl von verschiedenen Abbildungszuständen eingestellt. Die verschiedenen Abbildungszustände können beispielsweise eingestellt werden, indem das erste kreisbogenförmige Tragelement in verschiedene, insbesondere diskrete, Winkelpositionen bewegt wird, insbesondere sequentiell bewegt wird. Hierbei können in jedem Abbildungszustand alle Bilderfassungseinrichtungen aktiviert sein.

In jedem eingestellten Abbildungszustand wird jeweils eine Anzahl von verschiedenen Winkelpositionen des mindestens einen weiteren kreisbogenförmigen Tragelements eingestellt. Beispielsweise können verschiedene Winkelpositionen, insbesondere verschiedene diskrete Winkelpositionen, sequentiell eingestellt werden.

Weiter werden in jeder eingestellten Winkelposition des mindestens einen weiteren kreisbogenförmigen Tragelements die Lichtquellen sequentiell aktiviert. Hierbei ist es möglich, dass ausschließlich eine Lichtquelle aktiviert ist. Dies bedeutet, dass vor oder bei der Aktivierung einer Lichtquelle die bereits aktivierte(n) Lichtquelle(n) deaktiviert wird/werden. Alternativ können bei der Aktivierung einer noch deaktivierten Lichtquelle alle bereits aktivierten Lichtquellen im aktivierten Zustand verbleiben.

Hierdurch ergibt sich in vorteilhafter Weise eine Schrittsequenz zur möglichst schnellen, gleichzeitig auch qualitativ hochwertigen Erfassung eines Objektes, da das Objekt mit verschiedensten Beleuchtungsszenarien aus mehreren Richtungen optisch erfasst wird.

Insbesondere ermöglicht dieses Verfahren die nachfolgend noch näher erläuterte Bestimmung von geometrischen Informationen des Objekts, insbesondere mittels eines so genannten Multi-View-Stereo-Verfahrens (MVS-Verfahren) und/oder eines Photometric-Stereo-Verfahrens (PS-Verfahren), in Abhängigkeit der erzeugten Abbildungsinformationen.

Gleichzeitig wird auch die Bestimmung von Materialinformationen auf Grundlage der gleichen Abbildungsinformationen ermöglicht. Insbesondere kann die Bestimmung von Materialinformationen mittels einer sogenannten bidirektionale Texturierungsfunktion (BTF) und/oder einer bidirektionalen Reflektanzverteilungsfunktion (BRDF) erfolgen. Dies wird nachfolgend noch näher erläutert.

Somit ermöglicht die vorgeschlagene Ausbildung der Vorrichtung zur Erfassung eines Objekts mit mindestens zwei voneinander unabhängig bewegbaren kreisbogenförmigen Tragelementen eine zeitlich schnelle Erzeugung der für die Bestimmung von geometrischen Informationen als auch der Materialinformationen benötigten Abbilder. Insbesondere können Bewegungswege der kreisbogenförmigen Tragelemente derart gewählt werden, dass eine Erfassungszeit minimiert wird. So kann z.B. in einer ersten Winkelposition des ersten kreisbogenförmigen Tragelements das weitere kreisbogenförmige Tragelement sequentiell von einer Ausgangswinkelposition in eine Endwinkelposition bewegt werden. Nach Erreichen der Endwinkelposition kann dann das erste kreisbogenförmige Tragelement in die nächstfolgende Winkelposition bewegt werden. In dieser Winkelposition kann das weitere kreisbogenförmige Tragelement dann sequentiell von der Endwinkelposition in die Ausgangswinkelposition bewegt werden. Hierbei können in jeder der durch die Winkelpositionen gegebenen Abbildungs- und Beleuchtungszustände Abbilder erzeugt werden. Hierdurch wird sowohl der "Hinweg" des Weiteren kreisbogenförmigen Tragelements als auch der "Rückweg" zur Erzeugung von Abbildern genutzt.

Somit können also die Abbildungsinformationen, die in den durch die vorgeschlagene Vorrichtung einstellbaren Abbildungszuständen und/oder Beleuchtungszuständen erzeugt werden, sowohl zur Bestimmung von geometrischen Eigenschaften als auch zur Bestimmung von Materialinformationen genutzt werden.

In einer alternativen Ausführungsform werden die Abbildungs- und Beleuchtungszustände derart eingestellt, dass die Winkelpositionen des ersten kreisbogenförmigen Tragelements und des mindestens einen weiteren kreisbogenförmigen Tragelements gleich sind. Dies ist insbesondere in der vorhergehend erläuterten Ausführungsform mit sich überlagernden Rotationsachsen vorteilhaft, da sich hierdurch eine synchrone Bewegung der kreisbogenförmigen Tragelemente ergibt.

Mit anderen Worten bedeutet dies, dass die Winkelpositionen der kreisbogenförmigen Tragelemente derart eingestellt werden, dass sich zentrale optische Achsen zumindest eines Teils der Bilderfassungseinrichtung mit zentralen Strahlachsen zumindest eines Teils der Lichtquellen überlagern.

Hierdurch erfolgt in vorteilhafter Weise eine auf den jeweiligen Abbildungszustand optimal angepasste Beleuchtung, da bevorzugt Bereiche des Objektes beleuchtet werden, die in Erfassungsbereichen der Bilderfassungseinrichtung angeordnet sind.

In einer weiteren Ausführungsform wird ein Objekt mit einer vorbestimmten Bewegungsrichtung durch ein Kugelvolumen bewegt, welches der Kugeloberfläche zugeordnet ist, entlang derer das erste oder das mindestens eine weitere kreisbogenförmige Tragelement bewegbar ist. Weiter werden Abbildungs- und Beleuchtungszustände derart in Abhängigkeit einer Position des Objekts entlang der Bewegungsrichtung eingestellt, dass die kreisbogenförmigen Tragelemente und das Objekt derart relativ zueinander bewegt werden, dass keine Kollision zwischen Objekt und kreisbogenförmigen Tragelementen erfolgt. Beispielsweise können die Abbildungs- und Beleuchtungszustände derart eingestellt werden, dass die kreisbogenförmigen Tragelemente von einer Halbebene in Bewegungsrichtung vor dem Objekt in eine Halbebene in Bewegungsrichtung hinter dem Objekt bewegt werden, während sich das Objekt durch das Kugelvolumen bewegt. Die Halbebene kann hierbei senkrecht zur Bewegungsrichtung orientiert sein und das zu erfassende Objekt schneiden, insbesondere in einem Mittelpunkt, beispielsweise einem geometrischen Mittelpunkt, schneiden.

Hierdurch ergibt sich in vorteilhafter Weise eine zuverlässige Erfassung von sich bewegenden Objekten mittels der vorgeschlagenen Vorrichtung.

In einer weiteren Ausführungsform werden in Abhängigkeit der erzeugten Abbildungsinformationen geometrische Informationen oder Eigenschaften und/oder Materialinformationen oder -eigenschaften eines abgebildeten Objekts bestimmt.

Beispielsweise können geometrische Informationen durch das vorhergehend erwähnte MVS-Verfahren bestimmt werden. Hierbei erfolgt eine Erzeugung einer dreidimensionalen Rekonstruktion von Punkten auf einer Oberfläche des zu erfassenden Objekts in Abhängigkeit einer Vielzahl von zweidimensionalen Abbildern, die aus verschiedenen Perspektiven erzeugt wurden, wobei in jedem dieser Abbilder zumindest ein Teil, vorzugsweise das gesamte zu erfassende Objekt, abgebildet ist. Hierzu kann es erforderlich sein, dass Koordinatensysteme der Bilderfassungseinrichtungen in einem globalen Koordinatensystem bekannt sind (Registrierung).

Im vorhergehend bereits erwähnten PS-Verfahren werden geometrische Informationen in Abhängigkeit einer Vielzahl von zweidimensionalen Abbildern erzeugt, wobei die Abbilder jeweils aus einer bestimmten Perspektive aufgenommen sind und jeweils zumindest einen Teil des Objekts abbilden, wobei die Abbilder jedoch mit verschiedenen Beleuchtungsszenarien, insbesondere Beleuchtungswinkeln, erzeugt werden. Hierdurch können Normalenrichtungen von Teilabschnitten der Objektoberfläche bestimmt werden. Dieses kann für verschiedene Abbildungsperspektiven wiederholt werden. Dann können Tiefeninformationen in Abhängigkeit der vorhergehend erläuterten Normaleninformationen, beispielsweise durch Interpolation der Normaleninformationen, erzeugt werden.

Auch können das MVS-Verfahren und das PS-Verfahren kombiniert werden, um eine verbesserte Bestimmung von geometrischen Informationen zu ermöglichen.

Mittels des MVS-Verfahrens und/oder des PS-Verfahrens kann z.B. ein Modell des erfassten Objekts in Form einer Menge von dreidimensionalen Oberflächenpunkten (Punktewolke) aus den Abbildungen erzeugt werden. In Abhängigkeit dieser Menge kann dann eine Oberfläche des Objekts bestimmt werden. Z.B. kann die Oberfläche in Form von Dreiecken modelliert werden, die zwischen geographisch benachbarten Oberflächenpunkten erzeugt werden. Somit kann die Oberfläche des Objekts in Abhängigkeit einer Topologie der Oberflächenpunkte erzeugt werden.

Materialinformationen können beispielsweise mittels der vorhergehend erwähnten BTF bestimmt werden.

Auch kann eine Bestimmung von Materialinformationen mittels der vorhergehend bereits erwähnten BRDF erfolgen.

Die BTF bezeichnet eine Verteilungsfunktion, die sich auf die Beschreibungen von Oberflächen ("Texturen") bezieht, die nicht nur die Reflexionseigenschaften an einem bestimmten Punkt erfassen, sondern das beleuchtungs- und blickpunktabhängige Verhalten der gesamten Oberflächenstruktur enthalten. Sie stellt eine Erweiterung der BRDF dar. Durch Anwendung der BTF oder BRDF kann ein hohes Maß an Realismus unter wechselnden Beleuchtungen erreicht.

Zur Bestimmung von Materialinformationen mittels der BTF kann das erste kreisbogenförmige Tragelement, an welchem z.B. N Bilderfassungseinrichtungen angeordnet sind, in N diskrete Winkelpositionen bewegt werden. Weiter kann das weitere kreisbogenförmige Tragelement, an welchem z.B. M Lichtquellen angeordnet sind, in M diskrete Winkelpositionen bewegt werden.

Das erste kreisbogenförmige Tragelement kann dann sequentiell in jede der N Winkelpositionen bewegt werden, wobei in jeder dieser Winkelpositionen das weitere kreisbogenförmige Tragelement sequentiell in jede der M Winkelpositionen des Weiteren kreisbogenförmigen Tragelements bewegt wird und in jeder dieser Winkelpositionen die Lichtquellen sequentiell aktiviert werden. Wurden in einer Winkelposition alle Lichtquellen aktiviert, so wird das weitere kreisbogenförmige Tragelement in die nächstfolgende Winkelposition bewegt, wobei eine erneute sequentielle Aktivierung der Lichtquellen erfolgt. Wurde das weitere kreisbogenförmige Tragelement in alle Winkelpositionen bewegt und wurden in dieser Winkelposition alle Lichtquellen sequentiell aktiviert, so wird das erste kreisbogenförmige Tragelement in die nächstfolgende Winkelposition und das weitere kreisbogenförmige Tragelement in die erste Winkelposition bewegt, wobei dann wiederum eine erneute sequentielle Aktivierung der Lichtquellen erfolgt.

Selbstverständlich kann nach der Bewegung des Weiteren kreisbogenförmigen Tragelements in die nächstfolgende Winkelposition auch eine sequentielle Deaktivierung der Lichtquellen erfolgt.

Selbstverständlich kann nach der Bewegung des ersten kreisbogenförmigen Tragelements in die nächstfolgende Winkelposition auch das weitere kreisbogenförmige Tragelement in der zuletzt eingestellten Winkelposition verbleiben, wobei dann wiederum eine erneute sequentielle Aktivierung der Lichtquellen erfolgt. Danach wird das weitere kreisbogenförmige Tragelement wieder sequentiell in die erste Winkelposition bewegt.

In jeder Winkelposition des ersten und des Weiteren kreisbogenförmigen Tragelements und nach jeder Aktivierung einer Lichtquelle können alle Bilderfassungseinrichtungen jeweils ein Abbild erzeugen. Somit ergeben sich N x N x M x M unterschiedliche Abbilder Bilder, im Falle von N=M also N⁴ Abbilder. Hierbei können alle Winkelpositionen des ersten und des Weiteren kreisbogenförmigen Tragelements gleich sein. Vorzugsweise werden für die BTF Bilderfassungseinrichtungen mit einem matrixartigen Bildsensor verwendet, wobei also eine zweidimensionale Abbildung mit einer vorbestimmten Anzahl von Bildpunkten erzeugt wird.

Zur Bestimmung von Materialinformationen mittels der BRDF kann diese vorgeschlagene Sequenz ebenfalls angewendet werden. Werden hierzu jedoch Bilderfassungseinrichtungen mit matrixartigen Bildsensoren verwendet, so kann in Abhängigkeit aus den Intensitäten der vorbestimmten Anzahl von Bildpunkten einer Abbildung eine Referenzintensität bestimmt werden, da für die BRDF aus einer bestimmten Abbildungsperspektive nur ein Intensitätswert benötigt wird. Auch ist es möglich, eine zweidimensionale Abbildung in mehrere Teilbereiche, z.B. in vier Quadranten, zu unterteilen und in Abhängigkeit der Bildpunkte eines Teilbereichs je eine teilbereichsspezifische Referenzintensität zu bestimmen. Die Referenzintensität kann beispielsweise durch Mittelung der Intensitätswerte der Bildpunkte bestimmt werden. Hierdurch wird also eine durch die Position und Orientierung einer Bilderfassungseinrichtung gegebene Abbildungsperspektive in eine Anzahl von virtuellen Abbildungsperspektiven unterteilt, wobei die Anzahl von virtuellen Abbildungsperspektiven der Anzahl von Teilbereichen entspricht. Somit erhöht sich eine Anzahl von Perspektiven, ohne das mehr Winkelpositionen angefahren werden müssen. Insgesamt ergibt sich in vorteilhafter Weise, dass die vorgeschlagene Vorrichtung zur Erzeugung von Abbildungen geeignet ist, die sowohl für die BTF als auch die BRDF genutzt werden können, insbesondere auch dann, wenn matrixartige Bildsensoren eingesetzt werden.

Die vorhergehend erläuterten Verfahren zur Bestimmung von geometrischen Informationen und Materialinformationen basieren in vorteilhafter Weise auf den gleichen Abbildungsinformationen. Somit ermöglicht die vorgeschlagene Vorrichtung und die vorgeschlagenen Verfahren in vorteilhafter Weise eine Erzeugung von Abbildungsinformationen, die sowohl die Bestimmung von geometrischen Informationen als auch von Materialinformationen genutzt werden können. Beispielsweise können geometrische Informationen und Materialinformationen zeitlich parallel bestimmt werden, wodurch eine zeitlich schnellere Bestimmung von Eigenschaften des Objektes erfolgen kann. Auch müssen in vorteilhafter Weise nicht verschiedene Sequenzen von Abbildungs- und Beleuchtungszuständen durchlaufen werden, um geometrische Informationen als auch Materialinformationen zu bestimmen.

Die Erfindung wird anhand mehrerer Ausführungsbeispiele näher erläutert. Die Figuren zeigen:
- Fig. 1: eine Vorderansicht einer erfindungsgemäßen Vorrichtung,
- Fig. 2: eine Seitenansicht der in Fig. 1 dargestellten Vorrichtung,
- Fig. 3: eine Draufsicht auf die in Fig. 1 dargestellte Vorrichtung,
- Fig. 4: eine perspektivische Ansicht der in Fig. 1 dargestellten Vorrichtung,
- Fig. 5: eine schematische Darstellung einer erfindungsgemäßen Vorrichtung mit einem Förderband und
- Fig. 6: eine schematische Darstellung eines Erfassungsbereichs.

Nachfolgend bezeichnen gleiche Bezugszeichen Elemente mit gleichen oder ähnlichen technischen Merkmalen.

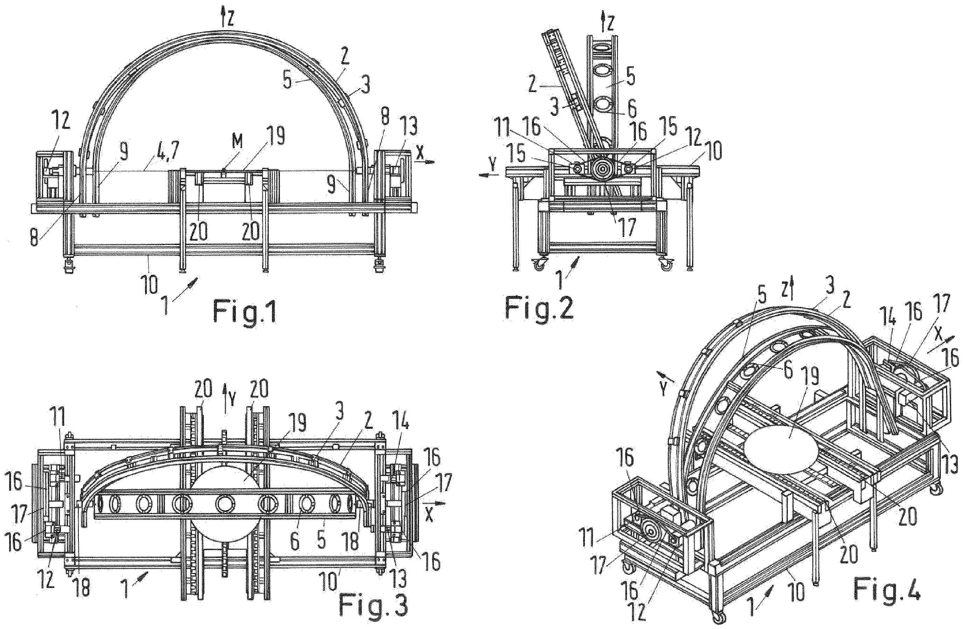

In Fig. 1 ist eine Vorderansicht auf eine erfindungsgemäße Vorrichtung 1 zur Erfassung eines nicht dargestellten Objekts dargestellt. Die Vorrichtung 1 umfasst ein erstes kreisbogenförmiges Tragelement 2, wobei eine erste Anzahl von Bilderfassungseinrichtungen 3 an dem ersten kreisbogenförmigen Tragelement 2 befestigt ist. Hierbei ist der Übersichtlichkeit halber nur eine Bilderfassungseinrichtung 3 mit einem Bezugszeichen gekennzeichnet. Das erste kreisbogenförmige Tragelement 2 ist um eine erste Rotationsachse 4 rotierbar.

Weiter umfasst die Vorrichtung 1 ein weiteres kreisbogenförmiges Tragelement 5, wobei eine zweite Anzahl von Lichtquellen 6 (siehe Fig. 2) an dem weiteren kreisbogenförmigen Tragelement 5 angeordnet ist. Der Übersichtlichkeit halber ist in Fig. 2 nur eine Lichtquelle 6 mit einem Bezugszeichen gekennzeichnet. Das weitere kreisbogenförmige Tragelement 5 ist um eine weitere Rotationsachse 7 rotierbar.

In Fig. 1 ist dargestellt, dass sich die erste Rotationsachse 4 und die weitere Rotationsachse 7 überlagern. Ebenfalls ist dargestellt, dass sich die Rotationsachsen 4, 7 entlang einer longitudinalen Achse x eines Referenzkoordinatensystems erstrecken. Ebenfalls dargestellt ist eine vertikale Achse z des Referenzkoordinatensystems und ein Ursprung des Referenzkoordinatensystems, der in einem Mittelpunkt M des ersten und des Weiteren kreisbogenförmigen Tragelements 2, 5 angeordnet ist. Somit weisen also das erste und das weitere kreisbogenförmigen Tragelement 2, 5 einen gemeinsamen Mittelpunkt M auf. In Fig. 3 ist zusätzlich noch eine laterale Achse y des Referenzkoordinatensystems dargestellt.

Das erste und das weitere kreisbogenförmige Tragelement 2, 5 sind als halbkreisförmige Abschnitte jeweils eines Tragelements ausgebildet. In Fig. 1 ist dargestellt, dass die Tragelemente zusätzlich zu dem ersten und dem weiteren kreisbogenförmigen Tragelement 2, 5 jeweils gerade Endabschnitte 8, 9 umfassen, die sich weg von dem Ende des jeweiligen halbkreisförmigen Abschnitts 2, 5 erstrecken.

In Fig. 1 ist weiter eine Tragstruktur 10 der Vorrichtung 1 dargestellt, wobei Servomotoren 11, 12, 13, 14 (siehe Fig. 4) und Kopplungselemente an der Tragstruktur 10 befestigt sind. Die Tragstruktur 10 kann hierbei aus Profilelementen bestehen und auf Rollen bewegbar gelagert sein.

Auch dargestellt ist ein Objektträger 19, der zylinderförmig ausgebildet ist und an Förderbändern 20 befestigt ist. Die Förderbänder 20 und somit auch der Objektträger 19 sind durch eine nicht näher bezeichnete Antriebseinrichtung entlang der lateralen Achse y (siehe Fig. 2) bewegbar. Die Förderbänder 20 können hierbei ebenfalls an der Tragstruktur 10 gelagert sein.

In Fig. 2 ist eine Seitenansicht der in Fig. 1 dargestellten Vorrichtung 1 dargestellt. Bezogen auf die longitudinale Achse x (siehe Fig. 1) des Referenzkoordinatensystems befindet sich das weitere kreisbogenförmige Tragelement 5 in einer Winkelposition von 0°. Das erste kreisbogenförmige Tragelement 2 befindet sich an einer Winkelposition von -20°. Dargestellt ist weiter ein erster Aktor 11 zum Antrieb des ersten kreisbogenförmigen Tragelements 2. Der erste Aktor 11 weist eine Abtriebsachse 15 auf, die über einen Riemen 16 mit einem Koppelelement 17 einer Doppelachse 18 (siehe Fig. 3) gekoppelt ist. Die Doppelachse 18 umfasst hierbei ein nicht dargestelltes erstes Achselement, wobei an das erste Achselement das erste kreisbogenförmige Tragelement 2 angeflanscht ist. Hierbei ist die Abtriebsachse 15 des ersten Aktors 11 über den Riemen 16 mit dem ersten Achselement der Doppelachse 18 verbunden. Das erste Achselement der Doppelachse 18 kann beispielsweise hohlzylinderförmig ausgebildet sein.

Weiter umfasst die Doppelachse 18 ein nicht dargestelltes zweites Achselement, das beispielsweise in einem Innenvolumen des hohlzylinderförmigen ersten Achselements angeordnet sein kann. Das weitere kreisbogenförmige Tragelement 5 ist an dieses weitere Achselement der Doppelachse 18 angeflanscht. Ein zweiter Aktor 12 ist über einen Riemen 16 und das Koppelelement 17 mit dem weiteren Achselement gekoppelt, wobei das weitere kreisbogenförmige Tragelement 5 durch den zweiten Aktor 12 antreibbar ist. Insbesondere ermöglicht dies, das erste und das weitere kreisbogenförmige Tragelement 2, 5 unabhängig voneinander anzutreiben.

In Fig. 3 ist eine Draufsicht auf die in Fig. 1 dargestellte Vorrichtung 1 dargestellt. Hierbei ist insbesondere ein dritter Aktor 13 und ein vierter Aktor 14 dargestellt. Hierbei ist dargestellt, dass das erste kreisbogenförmige Tragelement 2 an einem weiteren Ende des halbkreisförmigen Abschnitts an einem ersten Achselement einer weiteren Doppelachse 18 angeflanscht ist. Das erste Achselement ist, entsprechend den vorhergehenden Ausführungen, über ein weiteres Koppelelement 17 und einen Riemen 16 mit einer Abtriebsachse (nicht dargestellt) des dritten Aktors 13 verbunden. Ebenso ist ein weiteres Achselement (nicht dargestellt) der weiteren Doppelachse 18 über das Koppelelement 17 und einen Riemen 16 mit einer nicht dargestellten Abtriebsachse des vierten Aktors 14 gekoppelt. Weiter ist das weitere kreisbogenförmige Tragelement 5 an einem weiteren Ende des halbkreisförmigen Abschnitts an dem weiteren Achselement der weiteren Doppelachse 18 angeflanscht.

Somit ist das erste kreisbogenförmige Tragelement 2 durch die Aktoren 11, 13 bewegbar, insbesondere um die erste Rotationsachse 4 verschwenkbar. Ebenso ist das weitere kreisbogenförmige Tragelement 5 durch die Aktoren 12, 14 bewegbar, insbesondere um die zweite Rotationsachse 7 schwenkbar.

Hierbei ist es möglich, dass die kreisbogenförmigen Tragelemente 2, 5 durch die Aktoren 11, 12, 13, 14 ausschließlich in vorbestimmte, diskrete Winkelpositionen bewegbar sind.

Auch ist es möglich, dass eine einstellbare minimale Winkelposition -90° beträgt, wobei eine einstellbare maximale Winkelposition 90° beträgt. Dies betrifft sowohl das erste als auch das weitere kreisbogenförmige Tragelement 2, 5.

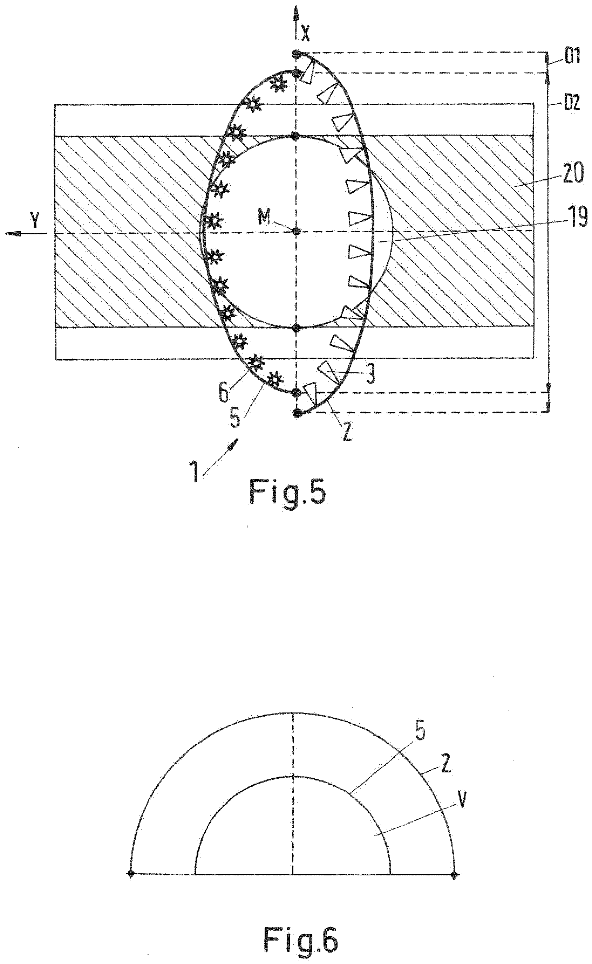

In Fig. 4 ist eine perspektivische Ansicht der in Fig. 1 dargestellten Vorrichtung 1 dargestellt. Beispielsweise kann ein zu erfassendes Objekt in einem Erfassungsvolumen V (siehe Fig. 6) angeordnet werden. Das Erfassungsvolumen V kann beispielsweise von einem Kugelvolumen eingefasst sein, wobei das weitere kreisbogenförmige Tragelement 5 bei einer Rotationsbewegung entlang einer Kugeloberfläche dieses Kugelvolumens bewegt wird. Selbstverständlich kann das Erfassungsvolumen auch kleiner als dieses Kugelvolumen sein, um notwendige Sicherheitsabstände einzuhalten. Insbesondere kann das zu erfassende Objekt auch auf einer horizontalen Ebene angeordnet werden, die durch die longitudinale Achse x und die laterale Achse y definiert ist. Insbesondere kann das zu erfassende Objekt auch zentriert in dem Erfassungsvolumen V angeordnet werden, wobei das zu erfassende Objekt im Bereich des Mittelpunkts M (siehe Fig. 1) des Referenzkoordinatensystems angeordnet wird.

Zur Erfassung des Objektes kann dann das erste kreisbogenförmige Tragelement sequentiell in verschiedene Winkelpositionen z.B. aus dem Winkelbereich von -90° (einschließlich) bis +90° (einschließlich) bewegt werden. Ebenfalls kann das weitere kreisbogenförmige Tragelement in verschiedene Winkelpositionen aus einem Winkelbereich von -90° (einschließlich) bis +90° (einschließlich) bewegt werden. Auch können Lichtquellen 6 in jeder dieser Winkelpositionen sequentiell aktiviert werden. Hierdurch ergeben sich, wie vorhergehend bereits erläutert, verschiedene Abbildungs- und Beleuchtungszustände. In jedem Abbildungs- und Beleuchtungszustand kann dann durch jede der Bilderfassungseinrichtungen 3 ein Abbild erzeugt werden.

In Fig. 5 ist eine schematische Draufsicht auf eine erfindungsgemäße Vorrichtung 1 dargestellt. Die Vorrichtung 1 umfasst wiederum ein erstes kreisbogenförmiges Tragelement 2, wobei eine Anzahl von Bilderfassungseinrichtungen 3 entlang des kreisbogenförmigen Tragelements 2 angeordnet ist. An einem weiteren kreisbogenförmigen Tragelement 5 ist eine Anzahl von Lichtquellen 6 angeordnet. Hierbei ist dargestellt, dass ein Durchmesser D1 des ersten kreisbogenförmigen Tragelements 2 größer als ein Durchmesser D2 des Weiteren kreisbogenförmigen Tragelements 5 ist.

Weiter ist ein Objektträger 19 dargestellt, der zylinderförmig ausgebildet ist und auf einem Förderband 20 befestigt ist. Das Förderband 20 ist hierbei mit einer Bewegungsrichtung in einer mit einem Pfeil gekennzeichneten Achsrichtung entlang der lateralen Achse y bewegbar. Somit kann der Objektträger 19 und ein darauf angeordnetes zu erfassendes Objekt durch ein Erfassungsvolumen V (siehe Fig. 6) der Vorrichtung 1 bewegt werden. Hierbei ist der Objektträger 19 derart angeordnet, dass eine Oberfläche des Objektträgers 19 orthogonal zu einer vertikalen Achse z (siehe z.B. Fig. 2) angeordnet ist und in einer horizontalen Ebene, die durch die longitudinale und die laterale Achse x, y definiert ist, liegt. Im in Fig. 5 dargestellten Zustand befindet sich ein Mittelpunkt des Objektträgers 19 in einem Mittelpunkt M der kreisbogenförmigen Tragelemente 2, 5.

Zur Erfassung eines sich in Bewegungsrichtung bewegenden Objektes, welches auf dem Objektträger 19 angeordnet ist, können beide kreisbogenförmigen Tragelemente jeweils in eine Winkelposition von -90° bewegt werden, wenn der Objektträger 19 oder das Objekt in Bewegungsrichtung hinter dem Mittelpunkt M der kreisbogenförmigen Tragelemente 2, 5 angeordnet ist. Sobald ein in Bewegungsrichtung vorderes Ende des Objektträgers 19 oder des Objekts den Mittelpunkt M erreicht, kann eine Winkelposition der kreisbogenförmigen Tragelemente von -90° auf 0° verändert werden, wodurch sich diese über dem Objekt positioniert werden. Selbstverständlich kann hierbei eine vorbestimmt Anzahl von Zwischenwinkelpositionen zwischen dem Winkel von -90° und 0° eingestellt werden. Erreicht ein in Bewegungsrichtung hinteres Ende des Objektträgers 19 oder des Objekts den Mittelpunkt M, kann eine Winkelposition der kreisbogenförmigen Tragelemente von 0° auf +90° verändert werden. Auch hierbei können bei der Bewegung von der Winkelposition von 0° bis zur Winkelposition von +90° selbstverständlich verschiedene Zwischenwinkelpositionen eingestellt werden.

Hierbei ist möglich, dass die kreisbogenförmigen Tragelemente 2, 5 synchron bewegt werden und jeweils die gleiche Winkelposition eingestellt wird. Selbstverständlich können die kreisbogenförmigen Tragelemente 2, 5 jedoch auch unabhängig voneinander, insbesondere nicht synchron und mit verschiedenen Winkelpositionen, angesteuert werden.

Für das Erfassen von statischen, also ortsfest angeordneten, Objekten im Erfassungsvolumen V kann in einem Vorbereitungsschritt die Winkelposition des ersten und des Weiteren kreisbogenförmigen Tragelements 2, 5 auf 0° eingestellt werden. Dann kann das Objekt in das Erfassungsvolumen V eingebracht werden. Dann können verschiedene Abbildungs- und Beleuchtungszustände eingestellt werden, wobei in den verschiedenen Abbildungs- und Beleuchtungszuständen verschiedene Winkelpositionen z.B. in einem Bereich von -90° (einschließlich) bis +90° (einschließlich) der kreisbogenförmigen Tragelemente 2, 5 eingestellt werden können.

In Fig. 6 ist exemplarisch ein Erfassungsvolumen V der in Fig. 1 dargestellten Vorrichtung 1 dargestellt. Hierbei ist schematisch das erste kreisbogenförmige Tragelement 2 und das weitere kreisbogenförmige Tragelement 5 dargestellt. Das Erfassungsvolumen V kann hierbei insbesondere halbkugelförmig sein.

Die vorgeschlagene Vorrichtung ermöglicht in vorteilhafter Weise die Anordnung von Bilderfassungseinrichtungen 3 und Lichtquellen 6 an verschiedenen Positionen mit einem vorbestimmten Diskretisierungslevel. Insbesondere ist keine menschliche Interaktion während der optischen Erfassung des Objekts notwendig. Wie in Bezug auf Fig. 5 erläutert, kann mittels der Vorrichtung auch ein Objekt beliebiger Länge erfasst werden, welches durch das Erfassungsvolumen V bewegt wird.

### Bezugszeichenliste

- 1: Vorrichtung
- 2: erstes kreisbogenförmiges Tragelement
- 3: Bilderfassungseinrichtung
- 4: erste Rotationsachse
- 5: weiteres kreisbogenförmiges Tragelement
- 6: Lichtquelle
- 7: zweite Rotationsachse
- 8: Endabschnitt
- 9: Endabschnitt
- 10: Tragstruktur
- 11: erster Aktor
- 12: zweiter Aktor
- 13: dritter Aktor
- 14: vierter Aktor
- 15: Abtriebsachse
- 16: Riemen
- 17: Koppelelement
- 18: Doppelachse
- 19: Objektträger
- 20: Förderband
- D1: Durchmesser
- D2: Durchmesser
- x: longitudinale Achse
- y: laterale Achse
- z: vertikale Achse
- M: Mittelpunkt
- V: Erfassungsvolumen

## Patentansprüche

1. Vorrichtung zur Erfassung eines Objekts, wobei die Vorrichtung (1) ein erstes kreisbogenförmiges Tragelement (2), mindestens ein weiteres kreisbogenförmiges Tragelement (5), Bilderfassungseinrichtungen (3) und Lichtquellen (6) umfasst, wobei mehr als zwei Bilderfassungseinrichtungen (3) an dem ersten kreisbogenförmigen Tragelement (2) angeordnet sind, wobei das erste kreisbogenförmige Tragelement (2) um eine erste Rotationsachse (4) rotierbar ist, wobei mehr als zwei Lichtquellen (6) an dem mindestens einen weiteren kreisbogenförmigen Tragelement (5) angeordnet sind, wobei das mindestens eine weitere kreisbogenförmige Tragelement (5) um eine weitere Rotationsachse (7) rotierbar ist, wobei sich die erste Rotationsachse (4) und die weitere Rotationsachse (7) in mindestens einem Schnittpunkt (M) schneiden,
**dadurch gekennzeichnet, dass**
die Bilderfassungseinrichtungen (3) äquiangular an dem ersten kreisbogenförmigen Tragelement (2) angeordnet sind, wobei die Lichtquellen (6) ausschließlich an dem weiteren kreisbogenförmigen Tragelement (5) angeordnet sind, wobei die Lichtquellen (6) äquiangular an dem weiteren kreisbogenförmigen Tragelement (5) angeordnet sind.

2. Vorrichtung nach Anspruch 1, **dadurch gekennzeichnet, dass** die Anzahl der Lichtquellen (6) gleich der Anzahl von Bilderfassungseinrichtungen (3) ist.

3. Vorrichtung nach Anspruch 1 oder 2, **dadurch gekennzeichnet, dass** die Bilderfassungseinrichtungen (3) an dem ersten kreisbogenförmigen Tragelement (2) und die Lichtquellen (6) an dem weiteren kreisbogenförmigen Tragelement (5) derart angeordnet sind, dass in mindestens einer Winkelposition des ersten kreisbogenförmigen Tragelements (2) das weitere kreisbogenförmige Tragelement (5) derart positionierbar ist, dass mindestens eine Bilderfassungseinrichtung (3) und mindestens eine Lichtquelle (6) auf einer Radiallinie angeordnet sind.

4. Vorrichtung nach einem der Ansprüche 1 bis 3, **dadurch gekennzeichnet, dass** das erste kreisbogenförmige Tragelement (2) und/oder das mindestens eine weitere kreisbogenförmige Tragelement (5) halbkreisförmig ausgebildet sind.

5. Vorrichtung nach Anspruch 1 bis 4, **dadurch gekennzeichnet, dass** die erste und die weitere Rotationsachse (4, 7) sich überlagern.

6. Vorrichtung nach einem der Ansprüche 1 bis 5, **dadurch gekennzeichnet, dass** das erste kreisbogenförmige Tragelement (2) durch mindestens einen ersten Aktor (11, 13) bewegbar ist, wobei das mindestens eine weitere kreisbogenförmige Tragelement (5) durch mindestens einen weiteren Aktor (12, 14) bewegbar ist, wobei jeder der Aktoren (11, 12, 13, 14) als Teil der Vorrichtung mechanisch mit dem jeweiligen Tragelement (2, 5) gekoppelt ist.

7. Vorrichtung nach einem der Ansprüche 1 bis 6, **dadurch gekennzeichnet, dass** das erste kreisbogenförmige Tragelement (2) in mindestens eine vorbestimmte Anzahl von verschiedenen Winkelpositionen relativ zur ersten Rotationsachse (4) bewegbar ist und/oder dass das mindestens eine weitere kreisbogenförmige Tragelement (5) in mindestens eine vorbestimmte Anzahl von verschiedenen Winkelpositionen relativ zur weiteren Rotationsachse (7) bewegbar ist.

8. Vorrichtung nach einem der Ansprüche 1 bis 7, **dadurch gekennzeichnet, dass** die Lichtquellen (6) als Ringlichter ausgebildet sind.

9. Verfahren zur Erfassung eines Objekts mittels einer der Vorrichtungen (1) nach einem der Ansprüche 1 bis 8, **dadurch gekennzeichnet, dass** mindestens ein Beleuchtungszustand eingestellt wird, wobei ein Beleuchtungszustand durch eine Einstellung einer Winkelposition des mindestens einen weiteren Tragelements (5) und durch eine Einstellung eines Aktivierungszustands mindestens einer der Lichtquellen (6) eingestellt wird, wobei weiter mindestens ein Abbildungszustand eingestellt wird, wobei der Abbildungszustand durch eine Einstellung einer Winkelposition des ersten Tragelements (2) und durch eine Einstellung eines Aktivierungszustands mindestens einer der Bilderfassungseinrichtungen (3) eingestellt wird, wobei im eingestellten Beleuchtungszustand und Abbildungszustand durch die aktivierten Bilderfassungseinrichtungen (3) jeweils eine Abbildung erzeugt wird.

10. Verfahren nach Anspruch 9, **dadurch gekennzeichnet, dass** eine vorbestimmte Anzahl von voneinander verschiedenen Abbildungszuständen und/oder eine vorbestimmte Anzahl von voneinander verschiedenen Beleuchtungszuständen eingestellt wird, wobei in jedem eingestellten Beleuchtungszustand und Abbildungszustand durch die aktivierten Bilderfassungseinrichtungen (3) jeweils eine Abbildung erzeugt wird.

11. Verfahren nach Anspruch 10, **dadurch gekennzeichnet, dass** eine Anzahl von verschiedenen Abbildungszuständen eingestellt wird, wobei in jedem eingestellten Abbildungszustand jeweils eine Anzahl von verschiedenen Winkelpositionen des mindestens einen weiteren kreisbogenförmigen Tragelements (5) eingestellt werden, wobei in jeder eingestellten Winkelposition des mindestens einen weiteren kreisbogenförmigen Tragelements (5) die Lichtquellen (6) sequentiell aktiviert werden.

12. Verfahren nach Anspruch 10, **dadurch gekennzeichnet, dass** die Abbildungs- und Beleuchtungszustände derart eingestellt werden, dass die Winkelpositionen des ersten kreisbogenförmigen Tragelements (2) und des mindestens einen weiteren kreisbogenförmigen Tragelements (5) gleich sind.

13. Verfahren nach einem der Ansprüche 9 bis 12, **dadurch gekennzeichnet, dass** ein Objekt mit einer vorbestimmten Bewegungsrichtung durch ein Kugelvolumen bewegt wird, welches der Kugeloberfläche zugeordnet ist, entlang derer das erste kreisbogenförmige Tragelement (2) oder das weitere kreisbogenförmige Tragelement (5) bewegbar ist, wobei die Abbildungs- und Beleuchtungszustände derart in Abhängigkeit einer Position des Objekts eingestellt werden, dass die kreisbogenförmigen Tragelemente (2, 5) und das Objekt derart relativ zueinander bewegt werden, dass keine Kollision zwischen Objekt und kreisbogenförmigen Tragelementen erfolgt.

14. Verfahren nach einem der Ansprüche 9 bis 13, **dadurch gekennzeichnet, dass** in Abhängigkeit der erzeugten Abbildungsinformationen geometrische Informationen und/oder Materialinformationen eines abgebildeten Objekts bestimmt werden.

## Claims

1. An apparatus for detecting an object, the apparatus (1) comprising a first circular-arc-shaped support element (2), at least one further circular-arc-shaped support element (5), image capture devices (3), and light sources (6), with more than two image capture devices (3) being arranged on the first circular-arc-shaped support element (2), the first circular-arc-shaped support element (2) being rotatable about a first axis of rotation (4), and more than two light sources (6) being arranged on the at least one further circular-arc-shaped support element (5), the at least one further circular-arc-shaped support element (5) being rotatable about a further axis of rotation (7), and the first axis of rotation (4) and the further axis of rotation (7) intersecting at least at one point of intersection (M),
**characterised in that**
the image capture devices (3) are arranged in an equiangular configuration on the first circular-arc-shaped support element (2), the light sources (6) being arranged exclusively on the further circular-arc-shaped support element (5), the light sources (6) being arranged in an equiangular configuration on the further circular-arc-shaped support element (5).

2. The apparatus according to claim 1, **characterised in that** the number of light sources (6) is equal to the number of image capture devices (3).

3. The apparatus according to claim 1 or 2, **characterised in that** the image capture devices (3) are arranged on the first circular-arc-shaped support element (2) and the light sources (6) are arranged on the further circular-arc-shaped support element (5) in such a way that in at least one angular position of the first circular-arc-shaped support element (2) the further circular-arc-shaped support element (5) is positionable in such a way that at least one image capture device (3) and at least one light source (6) are arranged on a radial line.

4. The apparatus according to any one of claims 1 to 3, **characterised in that** the first circular-arc-shaped support element (2) and/or the at least one further circular-arc-shaped support element (5) are semi-circular.

5. The apparatus according to claim 1 to 4, **characterised in that** the first and the further rotation axis (4, 7) are superimposed on one another.

6. The apparatus according to any one of claims 1 to 5, **characterised in that** the first circular-arc-shaped support element (2) is movable by at least one first actuator (11, 13), the at least one further circular-arc-shaped support element (5) being movable by at least one further actuator (12, 14), and each of the actuators (11, 12, 13, 14), as part of the apparatus, being mechanically coupled to the corresponding support element (2, 5) .

7. The apparatus according to any one of claims 1 to 6, **characterised in that** the first circular-arc-shaped support element (2) is movable into at least a predetermined number of various angular positions relative to the first rotation axis (4), and/or **in that** the at least one further circular-arc-shaped support element (5) is movable into at least a predetermined number of various angular positions relative to the further rotation axis (7) .

8. The apparatus according to any one of claims 1 to 7, **characterised in that** the light sources (6) are configured as ring lights.

9. A method for detecting an object by means of one of the apparatuses (1) according to any one of claims 1 to 8, **characterised in that** at least one illumination state is set, with an illumination state being set by setting an angular position of the at least one further support element (5) and by setting an activation state of at least one of the light sources (6), and at least one imaging state is also set, with the imaging state being set by setting an angular position of the first support element (2) and by setting an activation state of at least one of the image capture devices (3), wherein an image is generated by each of the activated image capture devices (3) in the set illumination state and imaging state.

10. The method according to claim 9, **characterised in that** a predetermined number of different imaging states and/or a predetermined number of different illumination states is set, wherein an image is generated by each of the activated image capture devices (3) in each set illumination state and imaging state.

11. The method according to claim 10, **characterised in that** a number of different imaging states is set, wherein a number of different angular positions of the at least one further circular-arc-shaped support element (5) is set in each set imaging state, wherein the light sources (6) are activated sequentially in each set angular position of the at least one further circular-arc-shaped support element (5).

12. The method according to claim 10, **characterised in that** the imaging and illumination states are set in such a way that the angular positions of the first circular-arc-shaped support element (2) and of the at least one further circular-arc-shaped support element (5) are the same.

13. The method according to any one of claims 9 to 12, **characterised in that** an object is moved with a predetermined movement direction through a spherical volume which is associated with the spherical surface along which the first circular-arc-shaped support element (2) or the further circular-arc-shaped support element (5) is movable, wherein the imaging and illumination states are set depending on a position of the object in such a way that the circular-arc-shaped support elements (2, 5) and the object are moved relative to one another in such a way that there is no collision between object and circular-arc-shaped support elements.

14. The method according to any one of claims 9 to 13, **characterised in that** geometric information and/or material information of an imaged object are determined depending on the generated imaging information.

## Revendications

1. Dispositif de détection d'un objet, dans lequel le dispositif (1) comprend un premier élément de support (2) en forme d'arc de cercle, au moins un autre élément de support (5) en forme d'arc de cercle, des dispositifs d'acquisition d'image (3) et des sources de lumière (6), dans lequel plus de deux dispositifs d'acquisition d'image (3) sont disposés sur le premier élément de support (2) en forme d'arc de cercle,
dans lequel le premier élément de support (2) en forme d'arc de cercle peut tourner autour d'un premier axe de rotation (4), dans lequel plus de deux sources de lumière (6) sont disposées sur l'au moins un autre élément de support (5) en forme d'arc de cercle,
dans lequel l'au moins un autre élément de support (5) en forme d'arc de cercle peut tourner autour d'un autre axe de rotation (7), dans lequel le premier axe de rotation (4) et l'autre axe de rotation (7) se coupent en au moins un point d'intersection (M),
**caractérisé en ce que**
les dispositifs d'acquisition d'image (3) sont disposés à angle égal du premier élément de support (2) en forme d'arc de cercle, dans lequel les sources de lumière (6) sont disposées exclusivement sur l'autre élément de support (5) en forme d'arc de cercle, dans lequel les sources de lumière (6) sont disposées à angle égal de l'autre élément de support (5) en forme d'arc de cercle.

2. Dispositif selon la revendication 1, **caractérisé en ce que** le nombre des sources de lumière (6) est identique au nombre de dispositifs d'acquisition d'image (3).

3. Dispositif selon la revendication 1 ou 2, **caractérisé en ce que** les dispositifs d'acquisition d'image (3) sont disposés sur le premier élément de support (2) en forme d'arc de cercle et les sources de lumière (6) sur l'autre élément de support (5) en forme d'arc de cercle, de telle sorte que, dans au moins une position angulaire du premier élément de support (2) en forme d'arc de cercle, l'autre élément de support (5) en forme d'arc de cercle peut être positionné de telle sorte qu'au moins un dispositif d'acquisition d'image (3) et au moins une source de lumière (6) sont disposés sur une ligne radiale.

4. Dispositif selon l'une quelconque des revendications 1 à 3, **caractérisé en ce que** le premier élément de support (2) en forme d'arc de cercle et/ou l'au moins un autre élément de support (5) en forme d'arc de cercle sont réalisés en forme de demi-cercle.

5. Dispositif selon la revendication 1 à 4, **caractérisé en ce que** le premier et l'autre axe de rotation (4, 7) se superposent.

6. Dispositif selon l'une quelconque des revendications 1 à 5, **caractérisé en ce que** le premier élément de support (2) en forme d'arc de cercle peut être déplacé par au moins un premier actionneur (11, 13), dans lequel l'au moins un autre élément de support (5) en forme d'arc de cercle peut être déplacé par au moins un autre actionneur (12, 14), dans lequel chacun des actionneurs (11, 12, 13, 14) en tant que partie du dispositif est accouplé mécaniquement à l'élément de support (2, 5) respectif.

7. Dispositif selon l'une quelconque des revendications 1 à 6, **caractérisé en ce que** le premier élément de support (2) en forme d'arc de cercle peut être déplacé dans au moins un nombre prédéfini de différentes positions angulaires par rapport au premier axe de rotation (4) et/ou que l'au moins un autre élément de support (5) en forme d'arc de cercle peut être déplacé dans au moins un nombre prédéfini de différentes positions angulaires par rapport à l'autre axe de rotation (7).

8. Dispositif selon l'une quelconque des revendications 1 à 7, **caractérisé en ce que** les sources de lumière (6) sont réalisées sous la forme de lumières annulaires.

9. Procédé de détection d'un objet au moyen d'un des dispositifs (1) selon l'une quelconque des revendications 1 à 8, **caractérisé en ce qu'**au moins un état d'éclairage est réglé, dans lequel un état d'éclairage est réglé par un réglage d'une position angulaire de l'au moins un autre élément de support (5) et par un réglage d'un état d'activation d'au moins une des sources de lumière (6), dans lequel au moins un état de reproduction est en outre réglé, dans lequel l'état de reproduction est réglé par un réglage d'une position angulaire du premier élément de support (2) et par un réglage d'un état d'activation d'au moins un des dispositifs d'acquisition d'image (3), dans lequel, dans l'état d'éclairage et l'état de reproduction réglé, respectivement une reproduction est produite par les dispositifs d'acquisition d'image (3) activés.

10. Procédé selon la revendication 9, **caractérisé en ce qu'**un nombre prédéfini d'états de reproduction différents les uns des autres et/ou un nombre prédéfini d'états d'éclairage différents les uns des autres est réglé, dans lequel, dans chaque état d'éclairage et état de reproduction réglé, respectivement une reproduction est produite par les dispositifs d'acquisition d'image (3) activés.

11. Procédé selon la revendication 10, **caractérisé en ce qu'**un nombre de différents états de reproduction est réglé, dans lequel, dans chaque état de reproduction réglé, respectivement un nombre de différentes positions angulaires de l'au moins un autre élément de support (5) en forme d'arc de cercle sont réglées, dans lequel, dans chaque position angulaire réglée de l'au moins un autre élément de support (5) en forme d'arc de cercle, les sources de lumière (6) sont activées de manière séquentielle.

12. Procédé selon la revendication 10, **caractérisé en ce que** les états de reproduction et d'éclairage sont réglés de telle sorte que les positions angulaires du premier élément de support (2) en forme d'arc de cercle et de l'au moins un autre élément de support (5) en forme d'arc de cercle sont identiques.

13. Procédé selon l'une quelconque des revendications 9 à 12, **caractérisé en ce qu'**un objet est déplacé avec une direction de déplacement prédéfinie par un volume sphérique, lequel est associé à la surface sphérique le long de laquelle le premier élément de support (2) en forme d'arc de cercle ou l'autre élément de support (5) en forme d'arc de cercle peut être déplacé, dans lequel les états de reproduction et d'éclairage sont réglés en fonction d'une position de l'objet, de telle sorte que les éléments de support (2, 5) en forme d'arc de cercle et l'objet sont déplacés l'un par rapport à l'autre, de telle sorte qu'aucune collision n'a lieu entre l'objet et les éléments de support en forme d'arc de cercle.

14. Procédé selon l'une quelconque des revendications 9 à 13, **caractérisé en ce que** des informations géométriques et/ou des informations de matériau d'un objet reproduit sont déterminées en fonction des informations de reproduction produites.
